# EUROPEAN PATENT SPECIFICATION

(11) **EP 3 204 565 B1**
(45) Date of publication and mention of the grant of the patent: **09.12.2020**
(21) Application number: 15794611.2
(22) Date of filing: 09.10.2015
(51) Int. Cl.: E04C 2/06, E04B 2/70, E04C 2/04, C04B 28/14, E04B 2/74, C04B 111/00

(54) **IMPROVED ACOUSTIC PERFORMANCE OF TIMBER FRAME PARTITIONS**
VERBESSERTES AKUSTISCHES VERHALTEN VON HOLZRAHMEN-TRENNWÄNDEN
PERFORMANCE ACOUSTIQUE AMÉLIORÉE DE CLOISONS SUR OSSATURE EN BOIS

(30) Priority: 09.10.2014 GB 201417905
(43) Date of publication of application: 16.08.2017
(73) Proprietor: SAINT-GOBAIN PLACO, 92400 Courbevoie (FR)
(72) Inventor: RIDEOUT, Jan, Coventry CV3 2TT (GB); EVANS, Robert, Coventry CV3 2TT (GB)
(74) Representative: Murgitroyd & Company
(86) International application number: PCT/GB2015/052968
(87) International publication number: WO 2016/055807

(56) References cited:
- WO-A1-2014/138283
- JP-A- 2009 299 460
- US-A1- 2007 048 490
- "APPLICATION AND FINISHING OF GYPSUM PANEL PRODUCTS GA-216-2007", , 31 December 2007 (2007-12-31), XP055237331, Retrieved from the Internet: URL:http://www.lafarge-na.com/GA-216-07_En glish.pdf [retrieved on 2015-12-17]

## Description

### Field of the invention

The present invention relates to the field of timber frame partitions that have improved acoustic performance, in particular to timber frame partitions having plasterboard cladding.

### Background to the invention

It is thought that timber stud partitions having gypsum board cladding exhibit worse acoustic performance that metal stud partitions with equivalent cladding.

It is desirable to improve the acoustic performance of timber stud partitions, without having a negative impact on other aspects of the performance of the partition.

The publication 'Application and Finishing of gypsum panel products GA-216-2007' discloses various methods of installing a plasterboard. One of the methods disclosed is the attachment of a plasterboard to a timber support fame with a plurality of screws. A screw spacing of 406 mm is also disclosed. This publication discloses the features of the preamble of claim 1.

WO 2014/138283 discloses an extrudable gypsum-based material formed from a mixture that includes gypsum in the range of about 40 to 90% by dry weight percent, a secondary material in the range of about 0.1 to 50% by dry weight percent, a reinforcement fibre in the range of about 1 to 20% by dry weight percent, a rheology modifying agent in the range of about 0.5 to 10% by dry weight percent, a retarder in the range of about 0.1 to 8% by dry weight percent and water in the range of 10 to 50% of a total wet material weight.

### Summary of the invention

Surprisingly, it has been found that when the gypsum board used as cladding contains relatively high levels of fibre and a polymeric additive, the number of fixing screws joining the gypsum cladding to the timber frame may be reduced so as to improve the acoustic performance of the partition, while the fire resistance is maintained at acceptable levels. This result is counter-intuitive, as it had previously been thought that a reduction in the number of fixing screws would inevitably result in a significant decrease in fire resistance.

Therefore, in a first aspect, the present invention may provide a partition for a building structure, the partition comprising a support frame and at least one plasterboard affixed to the support frame by means of a plurality of screws, wherein:
the plasterboard comprises a gypsum matrix having fibres embedded therein in an amount of at least 1 wt% relative to the gypsum, the gypsum matrix further comprising a polymeric additive that is present in an amount of at least 1 wt% relative to the gypsum;;
the support frame comprises a plurality of elongate timber members; and
the average spacing between nearest-neighbour screws is greater than 500mm.

Preferably, the average spacing between nearest-neighbour screws is greater than 550mm.

By reducing the number of screws, the installation costs for the partition are also reduced.

Typically, at least a portion of the screws is distributed around the perimeter of the plasterboard, and engages with timber members disposed at the perimeter of the plasterboard.

In general, at least one screw is located in a central region of the plasterboard, displaced from the perimeter of the plasterboard, and engages with a timber member disposed along a central region of the plasterboard, wherein the average distance between nearest-neighbour screws disposed along the central region of the plasterboard is greater than 600mm.

Preferably, the average distance between nearest-neighbour screws disposed along the central region of the plasterboard is greater than 800mm, preferably greater than 1000mm.

Preferably, the fibres are present in the gypsum matrix in an amount of at least 3 wt% relative to the gypsum, more preferably at least 5wt%.

Preferably, the polymeric additive is present in an amount of at least 3 wt% relative to the gypsum, more preferably at least 5wt%.

Typically, the fibres are glass fibres.

Typically, the polymeric additive is one of starch or polyvinyl acetate.

Preferably, the plasterboard is in direct contact with the support frame, that is, no adhesive is used to bond the plasterboard to the support frame. The plasterboard may comprise a gypsum core having a liner on one or both faces. In that case, the liner is typically in direct contact with the support frame.

### Detailed description

The invention will now be described by way of example with reference to the following Figures in which:
Figure 1 shows a schematic elevation view of an embodiment of a partition according to the first aspect of the present invention. The cladding is rendered transparent to show the detail of the frame;
Figure 2 shows a schematic elevation view of a partition according to the comparative example of the present disclosure; the cladding is rendered transparent to show the detail of the frame.
Figure 3 is a graph showing the results of acoustic testing for Example 1 and Comparative Example 1.

### Example 1

A test specimen was constructed from a timber frame, insulation and a gypsum plasterboard.

The timber frame consisted of 63mm x 38mm head and base rails connected by 63mm x 38mm timber studs extending therebetween. The distance between the head and base rails was 2400mm, while the timber studs were spaced at 600mm intervals.

65 mm insulation was placed within the stud cavity.

The frame was clad on each side with a single layer of boards having the following characteristics:
- a gypsum core containing 3wt% 6mm glass fibre and 5wt% Merifilm starch from Tate & Lyle; and
- a paper liner.

The stucco slurry used to prepare the boards had a water gauge (that is, a weight ratio of water to stucco) of 0.7.

The board had a thickness of 12.5mm and a weight of about 12 kg/m². The board dimensions were 1200mm x 2400mm.

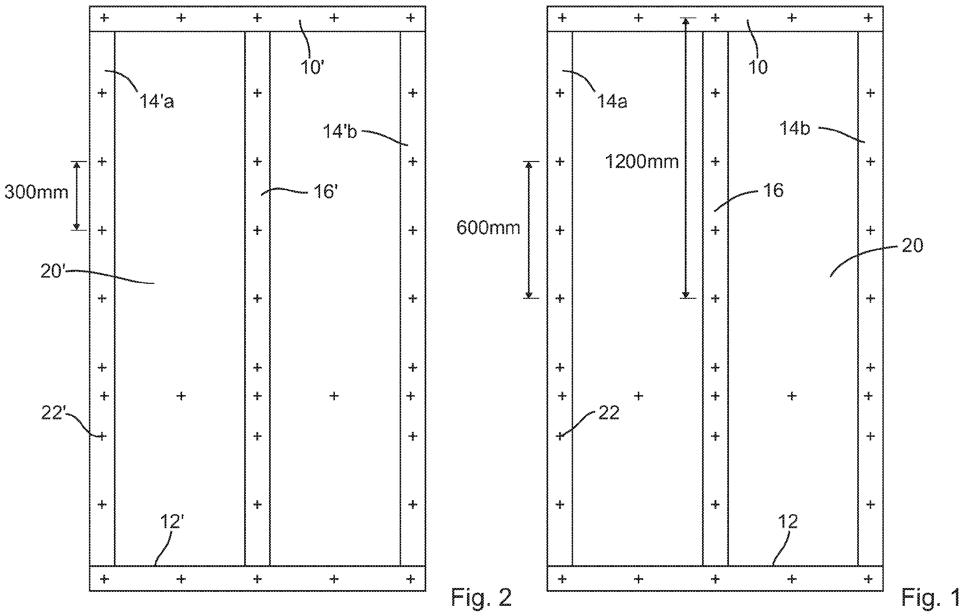

The boards were fixed to the frame as shown in Figure 1. Referring to Figure 1, the frame comprised a top rail 10 and a bottom rail 12, two lateral studs 14a,b and a central stud 16.

The board 20 is fixed to the frame by means of screws 22 that are spaced at 600mm intervals along the top and bottom rails 10,12 and the lateral studs 14a,b, and that are spaced at 1200mm intervals along the central stud 16.

### Comparative Example 1

A test specimen was constructed from a timber frame, insulation and a gypsum plasterboard.

The timber frame consisted of 63mm x 38mm head and base rails connected by 63mm x 38mm timber studs extending therebetween. The distance between the head and base rails was 2400mm, while the timber studs were spaced at 600mm intervals.

65 mm insulation was placed within the stud cavity.

The frame was clad on each side with a single layer of boards having the following characteristics:
- a gypsum core containing 3wt% 6mm glass fibre and 5wt% Merifilm starch from Tate & Lyle; and
- a paper liner.

The stucco slurry used to prepare the boards had a water gauge (that is, a weight ratio of water to stucco) of 0.7.

The board had a thickness of 12.5mm and a weight of about 12 kg/m². The board dimensions were 1200mm x 2400mm.

The boards were fixed to the frame as shown in Figure 2. Referring to Figure 2, the frame comprised a top rail 10' and a bottom rail 12', two lateral studs 14'a,b and a central stud 16'.

The board 20' is fixed to the frame by means of screws 22' that are spaced at 300mm intervals along the top and bottom rails 10',12' and the lateral studs 14'a,b, and that are spaced at 300mm intervals along the central stud 16'.

### Acoustic testing

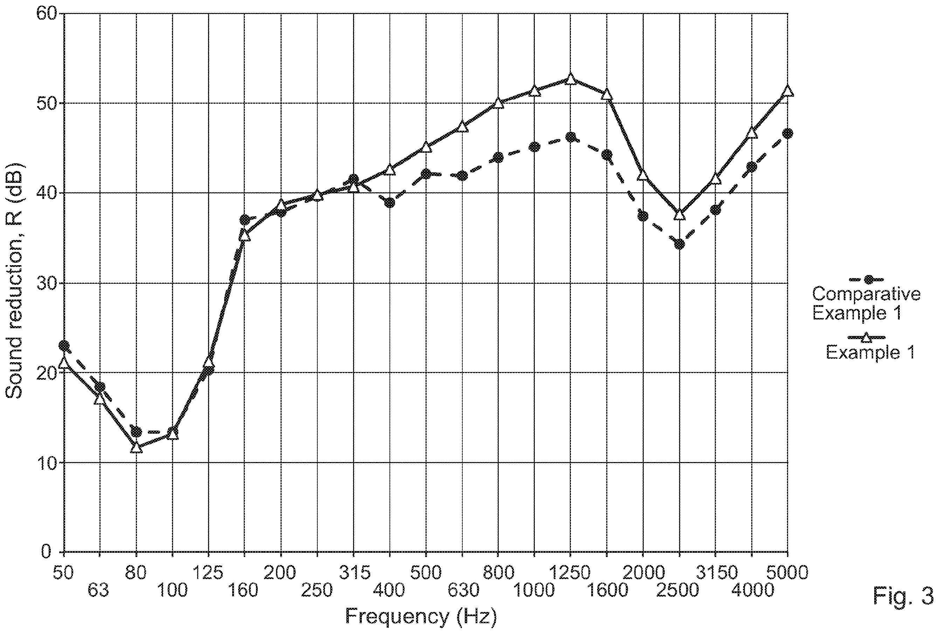

Acoustic testing was carried out according to BS EN ISO 10140-2:2010. The results are shown in Figure 3.

The results were processed as set out in ISO 717-1:1997, and the result of these calculations was an R_{w} value of 42 for Example 1 and an R_{w} value of 39 for Comparative Example 1.

### Fire tests

Fire testing was carried out according to the standards BS EN 1364-1 and BS 476: part 22. The requirements of the standard were shown to be satisfied for both Example 1 and Comparative Example 1.

## Claims

1. A partition for a building structure, the partition comprising a support frame and at least one plasterboard (20) affixed to the support frame by means of a plurality of screws (22), wherein the support frame comprises a plurality of elongate timber members (10, 12, 14a, 14b, 16), **characterised in that**
the plasterboard (20) comprises a gypsum matrix having fibres embedded therein in an amount of at least 1 wt% relative to the gypsum, the gypsum matrix further comprising a polymeric additive that is present in an amount of at least 1 wt% relative to the gypsum;
and **in that** the average spacing between nearest-neighbour screws (22) is greater than 500mm.

2. A partition according to claim 1, wherein the average spacing between nearest-neighbour screws (22) is greater than 550mm.

3. A partition according to any one of the preceding claims, wherein the fibres are present in the gypsum matrix in an amount of at least 3 wt% relative to the gypsum.

4. A partition according to any one of the preceding claims, wherein the polymeric additive is present in an amount of at least 3 wt% relative to the gypsum.

5. A partition according to claim 4, wherein the polymeric additive is present in an amount of at least 5 wt% relative to the gypsum.

6. A partition according to any one of the preceding claims, wherein the fibres are present in an amount of about 3 wt% relative to the gypsum and the polymeric additive is present in an amount of about 5 wt% relative to the gypsum.

7. A partition according to any one of the preceding claims, wherein the plasterboard (20) is in direct contact with the support frame.

8. A partition according to any one of the preceding claims, wherein at least a portion of the screws (22) is distributed around the perimeter of the plasterboard (20), and engages with timber members disposed at the perimeter of the plasterboard (20).

9. A partition according to any one of the preceding claims, wherein at least one screw (22) is located in an inner region of the plasterboard (20) that is displaced from the perimeter of the plasterboard (20), and engages with a central timber member (16) that contacts the inner region of the plasterboard (20), wherein the average distance between nearest-neighbour screws (22) disposed along the central timber member (16) is greater than 600mm.

10. A partition according to claim 9, wherein the average distance between nearest-neighbour screws (22) disposed along the central timber member (16) is greater than 800mm.

11. A partition according to claim 10, wherein the average distance between nearest-neighbour screws (22) disposed along the central timber member (16) is greater than 1000mm.

## Patentansprüche

1. Eine Trennwand für ein Bauwerk, wobei die Trennwand einen Tragrahmen und mindestens eine Gipskartonplatte (20), die mittels einer Vielzahl von Schrauben (22) an dem Tragrahmen befestigt ist, beinhaltet, wobei der Tragrahmen eine Vielzahl von langgestreckten Holzelementen (10, 12, 14a, 14b, 16) umfasst, **dadurch gekennzeichnet, dass**
die Gipskartonplatte (20) eine Gipsmatrix beinhaltet, die darin eingebettete Fasern in einer Menge von mindestens 1 Gew.-% bezogen auf den Gips aufweist, wobei die Gipsmatrix ferner ein Polymeradditiv beinhaltet, das in einem Anteil von mindestens 1 Gew.-% bezogen auf den Gips vorliegt;
und dass der durchschnittliche Abstand zwischen am nächsten benachbarten Schrauben (22) mehr als 500 mm beträgt.

2. Trennwand gemäß Anspruch 1, wobei der durchschnittliche Abstand zwischen am nächsten benachbarten Schrauben (22) mehr als 550 mm beträgt.

3. Trennwand gemäß einem der vorangehenden Ansprüche, wobei die Fasern in der Gipsmatrix in einem Anteil von mindestens 3 Gew.-% bezogen auf den Gips vorliegen.

4. Trennwand gemäß einem der vorangehenden Ansprüche, wobei das Polymeradditiv in einem Anteil von mindestens 3 Gew.-% bezogen auf den Gips vorliegt.

5. Trennwand gemäß Anspruch 4, wobei das Polymeradditiv in einem Anteil von mindestens 5 Gew.-% bezogen auf den Gips vorliegt.

6. Trennwand gemäß einem der vorangehenden Ansprüche, wobei die Fasern in einem Anteil von etwa 3 Gew.-% relativ zu dem Gips vorliegen und das Polymeradditiv in einem Anteil von etwa 5 Gew.-% relativ zu dem Gips vorliegt.

7. Trennwand gemäß einem der vorangehenden Ansprüche, wobei sich die Gipskartonplatte (20) im direkten Kontakt mit dem Tragrahmen befindet.

8. Trennwand gemäß einem der vorangehenden Ansprüche, wobei mindestens ein Teil der Schrauben (22) um den Umfang der Gipskartonplatte (20) verteilt ist und sich mit an dem Umfang der Gipskartonplatte (20) angeordneten Holzelementen im Eingriff befindet.

9. Trennwand gemäß einem der vorangehenden Ansprüche, wobei sich mindestens eine Schraube (22) in einem inneren Bereich der Gipskartonplatte (20), der von dem Umfang der Gipskartonplatte (20) versetzt ist, befindet und sich mit einem mittleren Holzelement (16), das den inneren Bereich der Gipskartonplatte (20) kontaktiert, im Eingriff befindet, wobei die durchschnittliche Entfernung zwischen am nächsten benachbarten Schrauben (22), die entlang des mittleren Holzelements (16) angeordnet sind, mehr als 600 mm beträgt.

10. Trennwand gemäß Anspruch 9, wobei der durchschnittliche Abstand zwischen am nächsten benachbarten Schrauben (22), die entlang des mittleren Holzelements (16) angeordnet sind, mehr als 800 mm beträgt.

11. Trennwand gemäß Anspruch 10, wobei der durchschnittliche Abstand zwischen am nächsten benachbarten Schrauben (22), die entlang des mittleren Holzelements (16) angeordnet sind, mehr als 1000 mm beträgt.

## Revendications

1. Une cloison pour une structure de bâtiment, la cloison comprenant une charpente de support et au moins une plaque de plâtre (20) fixée sur la charpente de support au moyen d'une pluralité de vis (22), dans laquelle la charpente de support comprend une pluralité d'éléments en bois allongés (10, 12, 14a, 14b, 16), **caractérisée en ce que** la plaque de plâtre (20) comprend une matrice de gypse ayant des fibres intégrées dans celle-ci en une quantité d'au moins 1 % en poids relativement au gypse, la matrice de gypse comprenant en outre un additif polymère qui est présent en une quantité d'au moins 1 % en poids relativement au gypse ;
et **en ce que** l'espacement moyen entre des vis les plus avoisinantes (22) est supérieur à 500 mm.

2. Une cloison selon la revendication 1, dans laquelle l'espacement moyen entre les vis les plus avoisinantes (22) est supérieur à 550 mm.

3. Une cloison selon n'importe laquelle des revendications précédentes, dans laquelle les fibres sont présentes dans la matrice de gypse en une quantité d'au moins 3 % en poids relativement au gypse.

4. Une cloison selon n'importe laquelle des revendications précédentes, dans laquelle l'additif polymère est présent en une quantité d'au moins 3 % en poids relativement au gypse.

5. Une cloison selon la revendication 4, dans laquelle l'additif polymère est présent en une quantité d'au moins 5 % en poids relativement au gypse.

6. Une cloison selon n'importe laquelle des revendications précédentes, dans laquelle les fibres sont présentes en une quantité d'environ 3 % en poids relativement au gypse et l'additif polymère est présent en une quantité d'environ 5 % en poids relativement au gypse.

7. Une cloison selon n'importe laquelle des revendications précédentes, dans laquelle la plaque de plâtre (20) est en contact direct avec la charpente de support.

8. Une cloison selon n'importe laquelle des revendications précédentes, dans laquelle au moins une partie des vis (22) est répartie autour du périmètre de la plaque de plâtre (20), et se met en prise avec des éléments en bois disposés au niveau du périmètre de la plaque de plâtre (20).

9. Une cloison selon n'importe laquelle des revendications précédentes, dans laquelle au moins une vis (22) est située dans une région interne de la plaque de plâtre (20) qui est écartée du périmètre de la plaque de plâtre (20), et se met en prise avec un élément en bois central (16) qui est en contact avec la région interne de la plaque de plâtre (20), dans laquelle la distance moyenne entre les vis les plus avoisinantes (22) disposées le long de l'élément en bois central (16) est supérieure à 600 mm.

10. Une cloison selon la revendication 9, dans laquelle la distance moyenne entre les vis les plus avoisinantes (22) disposées le long de l'élément en bois central (16) est supérieure à 800 mm.

11. Une cloison selon la revendication 10, dans laquelle la distance moyenne entre les vis les plus avoisinantes (22) disposées le long de l'élément en bois central (16) est supérieure à 1 000 mm.
